# EUROPÄISCHE PATENTSCHRIFT

(11) **EP 0 448 005 B1**
(45) Veröffentlichungstag und Bekanntmachung des Hinweises auf die Patenterteilung: **03.08.1994**
(21) Anmeldenummer: 91104124.2
(22) Anmeldetag: 18.03.1991
(51) Int. Cl.: G05B 19/10, D06F 33/02, G05G 1/02

(54) **Bedienvorrichtung für elektronisch gesteuerte Haushaltsgeräte**
Control device for electronically controlled household appliances
Dispositif de contrôle pour un équipement ménager à commande électronique

(30) Priorität: 20.03.1990 DE 4008827
(43) Veröffentlichungstag der Anmeldung: 25.09.1991
(73) Patentinhaber: Miele & Cie. GmbH & Co., D-33332 Gütersloh (DE)
(72) Erfinder: Basner, Joachim, W-4830 Gütersloh 1 (DE); Hopf, Christian, W-4740 Oelde 2 (DE)

(56) Entgegenhaltungen:
- EP-A- 0 242 875
- DE-A- 2 849 417
- DE-A- 3 129 802
- DE-A- 3 703 767
- US-A- 4 131 033
- US-A- 4 154 125

## Beschreibung

Die Erfindung betrifft eine Bedienvorrichtung für elektronisch gesteuerte Haushaltsgeräte, insbesondere Mikrowellenherde oder Waschmaschinen, in Form eines Bedienfeldes mit Anzeigeelementen, mit einem Bedienelement zur Auswahl von Funktionen, mit einer Impulsgebereinrichtung zur Eingabe von den Funktionen zugeordneten Funktionswerten wie Zeiten, Temperaturen oder Drehzahlen, und mit einem Bedienelement zum Starten eines ausgewählten Programmes.

Es ist bei Haushaltsgeräten allgemein bekannt, über Bedienelemente wie Drehwahlschalter Funktionen, z. B. Programme oder einen automatisierten Zeitablauf zu wählen. Diesen Funktionen werden mit einer zweiten Bedieneinrichtung Funktionswerte zugeordnet. Das jeweils ausgewählte Programm wird dann mit einem Startschalter begonnen.

Dabei besteht der Wunsch, das Bedienfeld möglichst übersichtlich zu gestalten und dem Benutzer die Bedienung dadurch zu vereinfachen. In der DE-OS 31 29 802 ist eine Steuereinrichtung beschrieben, bei welcher die Bedienungseinrichtung zur Eingabe von Funktionswerten, hier der Startzeit eines Herdes, als ein in Umfangsrichtung drehbarer Impulsgeber ausgebildet ist, welcher in axialer Richtung in zwei verschiedene Rastpositionen gebracht werden kann. Mit dem Impulsgeber werden in der ersten Rastposition Funktionen, hier die Einstellung einer Backdauer oder einer Kochdauer ausgewählt. In einem Funktiosanzeigefeld leuchtet dann eine der eingestellten Funktion zugeordnete Lampe auf. In der zweiten Rastposition wird ein der ausgewählten Funktion zugeordneter Funktionswert eingestellt. Dieser Wert wird in einem zweiten Anzeigefeld abgebildet.

Beim derzeitigen Stand der Technik ist es als nachteilig anzusehen, daß der Einbau des o. g. Funktionsanzeigefeldes einen zusätzlichen Montageschritt erfordert. Außerdem sind mit der o. g. Bedienungseinrichtung nur Zeit- oder Temperaturwerte einstellbar. Für die Einstellung von bei heutigen Haushaltsgeräten gebräuchlichen Funktionen wie Zuschaltung eines Strahlungsheizkörpers, Ober- oder Unterhitze bei Herden oder Auswahl einzelner Programme bei Waschmaschinen sind zusätzliche Schalter nötig, wodurch ebenfalls eine Montage erschwert wird und auch die Herstellungskosten steigen. Das zweimalige Einstellen einer Rastposition und anschließende Drehen des Impulsgebers könnte zudem von Benutzern als kompliziert empfunden werden.

Der Erfindung liegt die Aufgabe zugrunde, eine für den Benutzer einfach zu handhabende Bedienungs- und Anzeigevorrichtung zu schaffen, welche zudem leicht zu montieren und preisgünstig herzustellen ist.

Erfindungsgemäß wird diese Aufgabe mit dem in Patentanspruch 1 angegebenen Merkmalen gelöst. Zweckmäßige Weiterbildungen und Ausgestaltungen ergeben sich aus den nachfolgenden Unteransprüchen.

Die mit der erfindungsgemäßen Ausbildung erreichbaren Vorteile bestehen darin, daß die gesamte Bedienungs- und Anzeigevorrichtung nur noch aus wenigen Elementen besteht, nämlich einer Anzeige, einer Startvorrichtung und der Kombination Drehwahlschalter - Impulsgeber - Schalterbeleuchtung, welche als sogenannter Multifunktionsschalter ausgebildet ist. Eine solche Anordnung ist einerseits leicht und übersichtlich zu handhaben und hat andererseits den Vorteil, daß sich eine Endmontage auf wenige Einzelteile beschränkt. Hinzu kommt eine Platzeinsparung, so daß das Bedienfeld verkleinert werden kann.

Ein Ausführungsbeispiel der Erfindung ist in den Zeichnungen rein schematisch dargestellt und wird nachstehend näher erläutert. Es zeigen:
- Figur 1: eine Frontansicht einer erfindungsgemäß ausgestatteten Bedienungs- und Anzeigevorrichtung für einen Mikrowellenherd,
- Figur 2: den Bedienungsablauf und die während der Bedienung erfolgenden Anzeigen der Anzeigevorrichtung bei einem Mikrowellenherd in Form eines Programmablaufplans.
- Figur 3: den Programmablauf und die während des Programmablaufs erfolgenden Anzeigen der Anzeigevorrichtung beim oben erwähnten Mikrowellenherd in Form eines Programmablaufplans.

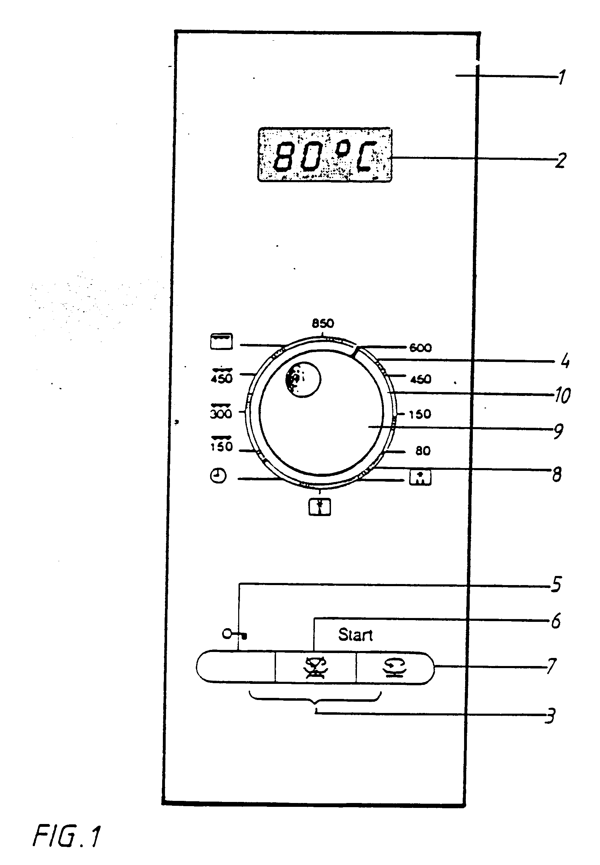

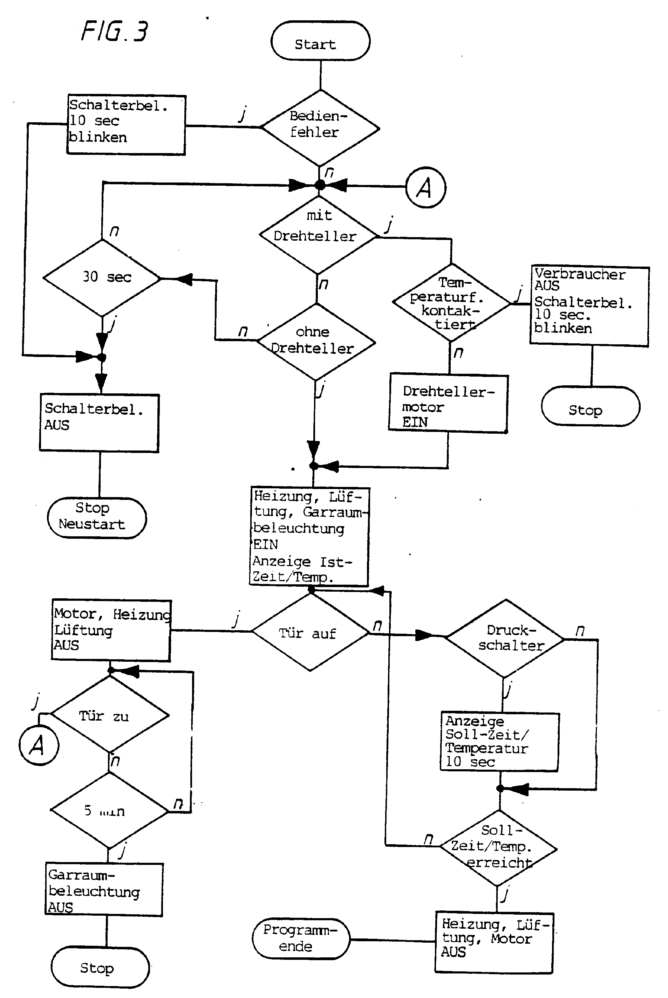

Figur 1 zeigt die Bedienungs- und Anzeigevorrichtung, welche als Bedienfeld (1) ausgebildet ist. Im Bedienfeld (1) angeordnet sind ein Anzeigenfeld (2), ein Starttastenblock (3) und ein Multifunktionsschalter (4). Der Starttastenblock (3) besteht aus drei Tasten (5, 6, 7) zur Türentriegelung, zum Starten ohne zugeschalteten Drehteller und zum Starten mit zugeschaltetem Drehteller.

Der Multifunktionsschalter (4) setzt sich aus einem Drehwahlschalter (8), einem Drehknopf (9) und einer Schalterbeleuchtung (10) zusammen. Der Drehwahlschalter (8) dient zur Auswahl von Leistungsstufen oder dem Einschalten eines zusätzlichen Strahlungskörpers. Mit dem Drehknopf (9) wird durch eine Drehung in Umfangsrichtung über einen Impulsgeber eine Zeit oder Temperatur eingestellt, bei deren Erreichen die gewählte Beheizung abgeschaltet wird. Zusätzlich ist der Drehknopf (9) in axialer Richtung verstellbar als nichtrastender Druckschalter ausgebildet. Diesem Druckschalter werden in Abhängigkeit vom Programmstatus des Haushaltgerätes unterschiedliche Funktionen zugeordnet. Diese werden in der folgenden Beschreibung des Programmablaufplans näher erläutert.

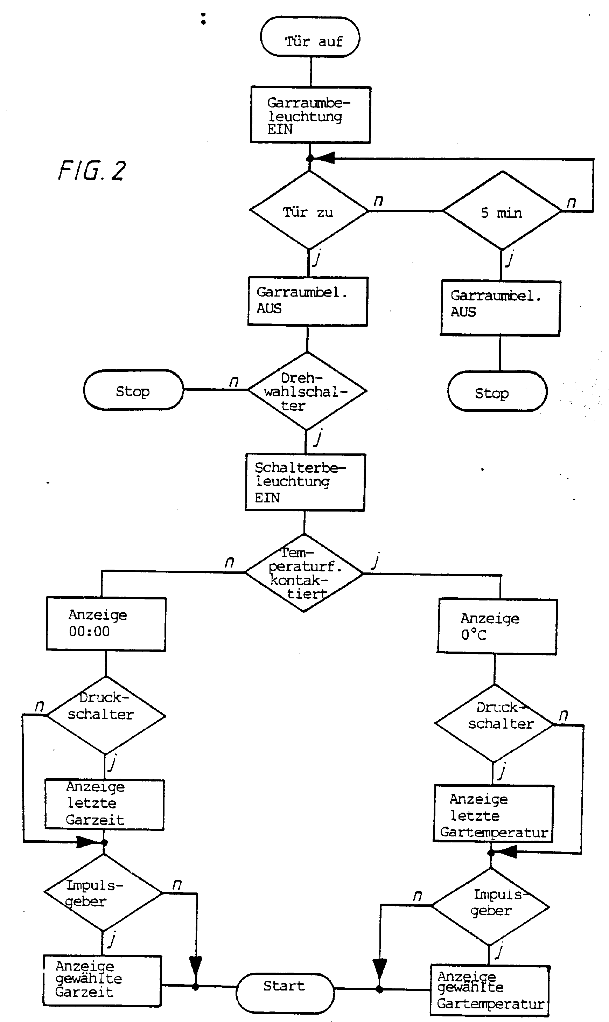

In Figur 2 ist der Bedienungsablauf und die während der Bedienung erfolgenden Anzeigen der Anzeigevorrichtung als Programmablaufplan dargestellt.

Die Bedienung beginnt mit dem Öffnen der Tür. Nach dem Öffnen der Tür schaltet sich die Garraumbeleuchtung ein. Wird die Tür innerhalb von 5 Minuten nicht geschlossen, so erlischt die Garraumbeleuchtung und der Programmablauf wird beendet. Wird die Garraumtür geschlossen, so erlischt die Garraumbeleuchtung ebenfalls. Wird der Drehwahlschalter (8) nicht betätigt, so wird der Programmablauf beendet. Bei Betätigung des Drehwahlschalters wird die Schalterbeleuchtung (10) eingeschaltet. Ist ein Temperaturfühlter in Form eines Bratspießes zur Messung einer Bratenkerntemperatur nicht kontaktiert, so erfolgt die Anzeige oo:oo.

Durch Drücken des Drehknopfes läßt sich ein sogenannter Quickstart durchführen. Dabei wird die im letzten Programmablauf gewählte Garzeit eingestellt und im Anzeigefeld zur Anzeige gebracht. Mit dem Drehknopf (9) läßt sich die angezeigte Garzeit noch bearbeiten.

Ist der Temperaturfühler in Form eines Bratspießes kontaktiert, so erscheint im Anzeigefeld die Anzeige 0° C. Auch hier läßt sich mit dem Druckschalter ein Quickstart durchführen. Dabei gelangt die im letzten Programmablauf eingestellte Gartemperatur zur Anzeige. Auch hier läßt sich die angezeigte Gartemperatur mit dem Drehknopf (9) noch bearbeiten. Danach kann das gewählte Programm gestartet werden.

Figur 3 zeigt den Programmablauf und die während des Programmablaufs erfolgenden Anzeigen der Anzeigevorrichtung in Form eines Programmablaufplans. Erfolgt bei der Bedienung ein Bedienfehler, so blinkt die Schalterbeleuchtung (10) für 10 Sekunden auf. Danach erlischt die Schalterbeleuchtung und der Programmablauf wird gestoppt. Ein Neustart ist möglich. Ist kein Bedienfehler aufgetreten, so kann das Programm mit zugeschaltetem Drehteller und ohne zugeschalteten Drehteller gestartet werden.

Wird das Programm innerhalb von 30 Sekunden nicht gestartet, so erlischt die Schalterbeleuchtung (10) ebenfalls und der Programmablauf wird gestoppt. Auch hier ist ein Neustart möglich. Bei einem Start mit zugeschaltetem Drehteller darf der Temperaturfühlter in Form eines Bratspießes nicht kontaktiert sein. Ist dies der Fall, so werden sofort sämtliche Verbraucher ausgeschaltet und die Schalterbeleuchtung (10) blinkt 10 Sekunden lang. Danach wird der Programmablauf gestoppt.

Ist der Temperaturfühlter nicht kontaktiert, so wird nach einem Start mit zugeschaltetem Drehteller der Drehtellermotor ausgeschaltet. Sowohl bei einem Start mit zugeschaltetem Drehteller wie auch bei einem Start ohne zugeschalteten Drehteller werden danach das Magnetron oder zusätzliche Strahlungsheizkörper, die Lüftung und die Garraumbeleuchtung eingeschaltet. Im Anzeigefeld (2) wird die aktuelle Zeit oder Bratentemperatur angezeigt. Wird während des Programmablaufs die Tür geöffnet, werden sofort der Drehtellermotor, das Magnetron, eventuell eingeschaltete Strahlungsheizkörper und die Belüftung ausgeschaltet. Wird die Tür innerhalb von 5 Minuten wieder geschlossen, so kann ein bei Punkt A einsetzender Neustart erfolgen. Wird die Garraumtür nicht innerhalb von 5 Minuten wieder geschlossen, wo wird die Garraumbeleuchtung ausgeschaltet und der Programmablauf gestoppt.

Bei einem normalen Programmablauf kann durch Drücken des Drehknopfes (9) jederzeit die eingestellte SollZeit oder SollTemperatur zur Anzeige gebracht werden. Ist der eingestellte Sollwert erreicht, so werden die Verbraucher ausgeschaltet und das Programm beendet.

In einem in den Zeichnungen nicht dargestellten Ausführungsbeispiel wird eine Waschmaschine mit einer frei programmierbaren Steuerung mit einer erfindungsgemäß ausgebildeten Bedienvorrichtung ausgestattet. Dabei wird mit dem Drehwahlschalter (8) ein Speicher angewählt, welcher zur Aufnahme eines für einen festgelegten Programmschritt zugehörigen Funktionswertes dient. Ein solcher Funktionswert wird mit dem Drehknopf (9) eingestellt und durch Druck auf denselben im Speicher abgelegt.

## Patentansprüche

1. Bedienvorrichtung für elektronisch gesteuerte Haushaltsgeräte, insbesondere Mikrowellenherde oder Waschmaschinen, in Form eines Bedienfeldes mit Anzeigeelementen, mit einem Bedienelement zur Auswahl von Funktionen, mit einer Impulsgebereinrichtung zur Eingabe von den Funktionen zugeordneten Funktionswerten wie Zeiten, Temperaturen oder Drehzahlen, und mit einem Bedienelement zum Starten eines ausgewählten Programmes,
mit folgenden Merkmalen:
- ein Bedienelement ist als ringförmiger Drehwahlschalter (8) ausgebildet;
- ein zweites Bedienelement ist als Impulsgebereinrichtung in Form eines in Umfangsrichtung drehbaren Drehknopfes (9) ausgebildet;
- der Drehwahlschalter (8) und der Drehknopf (9) sind zu einem Multifunktionsschalter (4) kombiniert, wobei der Drehwahlschalter (8) konzentrisch um den Drehknopf (9) herum angeordnet ist.

2. Bedienvorrichtung nach Anspruch 1
dadurch gekennzeichnet,
daß der Drehknopf (9) der Impulsgebereinrichtung zusätzlich in axialer Richtung verstellbar als Druckschalter ausgebildet ist.

3. Bedienvorrichtung nach einem der Ansprüche 1 oder 2,
dadurch gekennzeichnet,
daß sich im Drehknopf (9) und/oder um den Drehknopf (9) herum eine Beleuchtungseinrichtung (10) befindet, und daß die Beleuchtungseinrichtung (10) kreisringförmig ausgebildet und konzentrisch zum Drehwahlschalter (8) angeordnet ist.

4. Bedienvorrichtung nach einem der Ansprüche 1 bis 3,
dadurch gekennzeichnet,
daß die Steuerung des Haushaltsgerätes dem Druckschalter während verschiedener Programmabschnitte verschiedene Funktionen zuordnet.

5. Bedienvorrichtung nach einem der Ansprüche 1 bis 4,
dadurch gekennzeichnet,
daß die Steuerung die Beleuchtungseinrichtung (10) mit zustandsabhängigen Signalen ansteuert.

6. Bedienvorrichtung nach einem der Ansprüche 1 bis 5,
dadurch gekennzeichnet,
- daß die Steuerung als frei programmierbare Steuerung ausgebildet ist;
- daß die einzelnen Programmschritten zugehörigen Speicher mit dem Drehwahlschalter (8) angewählt werden;
- daß die einzelnen Programmschritten zugeordneten Funktionswerte mit dem Drehknopf ausgewählt werden
und
- daß die Funktionswerte durch Betätigen des Druckschalters in den Speicher übernommen werden.

## Claims

1. Control device for electronically controlled domestic appliances, more especially microwave ovens or washing machines, in the form of a control panel having display elements, having a control element for selecting functions, having a pulse transmitter for the inputting of functional values associated with the functions, such as times, temperatures or speeds, and having a control member for starting a selected programme, having the following features:
- one control member is an annular rotary selector switch (8);
- a second control member is a pulse transmitter in the form of a rotary knob (9), which is rotatable in the circumferential direction;
- the rotary selector switch (8) and the rotary knob (9) are combined to form a multifunctional switch (4), the rotary selector switch (8) being disposed concentrically around the rotary knob (9).

2. Control device according to claim 1, characterised in that the rotary knob (9) of the pulse transmitter is additionally a pressure switch which is adjustable in the axial direction.

3. Control device according to one of claims 1 or 2, characterised in that an illuminating means (10) is situated in the rotary knob (9) and/or around the rotary knob (9), and in that the illuminating means (10) has a circular configuration and is disposed concentrically relative to the rotary selector switch (8).

4. Control device according to one of claims 1 to 3, characterised in that the control of the domestic appliance allocates various functions to the pressure switch during various programme steps.

5. Control device according to one of claims 1 to 4, characterised in that the control actuates the illuminating means (10) with state-dependent signals.

6. Control device according to one of claims 1 to 5, characterised
- in that the control is a freely programmable control;
- in that the memories belonging to individual programme steps are dialled with the rotary selector switch (8);
- in that the functional values associated with individual programme steps are selected by the rotary knob; and
- in that the functional values are passed into the memory by actuation of the pressure switch.

## Revendications

1. Dispositif de commande pour appareils ménagers à commande électronique, notamment pour fours à micro-ondes ou lave-linge, sous la forme d'un tableau de commande comportant des éléments d'affichage, un élément de commande pour sélectionner des fonctions, un générateur d'impulsions pour introduire des valeurs fonctionnelles telles que les temps, les températures ou les vitesses de rotation qui sont associées aux fonctions, et comportant également un élément de commande pour faire démarrer un programme sélectionné, présentant les caractéristiques suivantes :
- un élément de commande est réalisé en tant que commutateur sélecteur rotatif (8) ;
- un deuxième élément de commande est réalisé en tant que générateur d'impulsions sous la forme bouton tournant (9) tournant dans la direction du pourtour ;
- le commutateur sélecteur rotatif (8) et le bouton tournant (9) sont combinés pour former un commutateur multifonctions (4), sachant que le commutateur sélecteur rotatif (8) est disposé de façon concentrique autour du bouton tournant (9).

2. Dispositif de commande selon la revendication 1, caractérisé en ce que le bouton tournant (9) du générateur d'impulsions est réalisé de manière à pouvoir en plus être déplacé dans la direction de l'axe en tant que commutateur à poussoir.

3. Dispositif de commande selon l'une des revendications 1 ou 2, caractérisé en ce qu'un dispositif d'éclairage (10) se trouve dans le bouton poussoir (9) et/ou autour du bouton poussoir (9), et en ce que le dispositif d'éclairage (10) est réalisé en forme d'anneau et est disposé de façon concentrique autour du commutateur sélecteur rotatif (8).

4. Dispositif de commande selon l'une des revendications 1 à 3, caractérisé en ce que la commande de l'appareil ménager associe au commutateur à poussoir différentes fonctions au cours de différentes phases de programme.

5. Dispositif de commande selon l'une des revendications 1 à 4, caractérisé en ce que la commande actionne le dispositif d'éclairage (10) à l'aide de signaux qui dépendent de son état.

6. Dispositif de commande selon l'une des revendications 1 à 5, caractérisé en ce que
- la commande est réalisée en tant que commande pouvant être programmée librement ;
- les mémoires associées aux différentes phases du programme sont sélectionnées à l'aide du commutateur sélecteur tournant (8),
- les valeurs fonctionnelles associées à différentes phases du programme sont sélectionnées à l'aide du bouton tournant, et en ce que
- les valeurs fonctionnelles sont enregistrées par la mémoire en actionnant le commutateur à poussoir.
